(19) Europäisches Patentamt / European Patent Office / Office européen des brevets

(11) **EP 2 760 960 B3**

(12) **NEW EUROPEAN PATENT SPECIFICATION**
After limitation procedure (B3-1)

(45) Mention of the grant of the patent:
**24.02.2016 Bulletin 2016/08**

(45) Date of publication and mention
of the limitation decision:
**B3-1 04.01.2017 Bulletin 2017/01**

(21) Application number: **12772618.0**

(22) Date of filing: **24.09.2012**

(51) Int Cl.:
*C09J 133/08* (2006.01)    *C09J 133/10* (2006.01)

(86) International application number:
**PCT/US2012/056835**

(87) International publication number:
**WO 2013/048934 (04.04.2013 Gazette 2013/14)**

(54) **PRESSURE-SENSITIVE ADHESIVES WITH A (METH)ACRYLIC-BASED ELASTOMERIC MATERIAL**

DRUCKEMPFINDLICHE HAFTSTOFFE MIT EINEM ELASTOMERMATERIAL AUF (METH)ACRYLBASIS

ADHÉSIFS AUTOCOLLANTS AVEC UN MATÉRIAU ÉLASTOMÈRE À BASE (MÉTH)ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2011 US 201161538997 P**

(43) Date of publication of application:
**06.08.2014 Bulletin 2014/32**

(73) Proprietor: **3M Innovative Properties Company**
**St. Paul, MN 55133-3427 (US)**

(72) Inventors:
• **CLAPPER, Jason D.**
**Saint Paul, Minnesota 55133-3427 (US)**
• **LEWANDOWSKI, Kevin M.**
**Saint Paul, Minnesota 55133-3427 (US)**
• **CHEN, Zhong**
**Saint Paul, Minnesota 55133-3427 (US)**
• **TRASER, Steffen**
**64291 Darmstadt (DE)**
• **D'HAESE, Francois C.**
**1831 Diegem (BE)**

(74) Representative: **Herzog, Fiesser & Partner**
**Patentanwälte PartG mbB**
**Isartorplatz 1**
**80331 München (DE)**

(56) References cited:
**EP-A2- 0 624 635    WO-A1-2011/119363**

**Description**

**Cross Reference to Related Application**

This application claims priority to U.S. Provisional Patent Application 61/538997, filed on September 26, 2011, the disclosure of which is incorporated by reference in their entirety.

**Field**

Pressure-sensitive adhesives are provided that include (meth)acrylic-based elastomeric materials prepared using long chain, branched alkyl (meth)acrylates.

**Background**

Pressure-sensitive adhesives are adhesives with specific characteristics such as aggressive and permanent tack, adherence with no more than finger pressure, sufficient ability to hold onto an adherend, and sufficient cohesive strength to be removed cleanly from the adherend. As applications for pressure-sensitive adhesives have increased substantially in recent years, performance requirements have become more demanding.

While a variety of natural and synthetic elastomeric materials have been included in pressure-sensitive adhesives, the use of (meth)acrylic-based elastomeric material is widespread due to a number of beneficial properties. In addition to providing the desired degree of adhesion and cohesion, (meth)acrylic-based elastomeric materials often can be tailored to provide other desirable characteristics such as elasticity, tackiness, transparency, resistance to light and oxidation, and the like.

(Meth)acrylic-based elastomeric materials have been described, for example, in the following patent references: EP Patent Application 2072594 A1 (Kondou et al.), U.S. Patent 5,648,425 (Everaerts et al.), U.S. Patent 6,777,079 B2 (Zhou et al.), and U.S. Patent Application Publication 2011/04486 A1 (Ma et al.).

**Summary**

A pressure-sensitive adhesive composition is provided that includes a (meth)acrylic-based elastomeric material prepared from an alkyl (meth)acrylate monomer having an alkyl group that is branched and that has at least 14 carbon atoms. The (meth)acrylic-based elastomeric material is often compatible with tackifiers of low polarity (e.g., non-polar tackifiers) and can be formulated to adhere to challenging substrates such as those with a low surface energy.

In one aspect, a pressure-sensitive adhesive composition is provided that includes a (meth)acrylic-based elastomeric material. The (meth)acrylic-based elastomeric material contains a reaction product of polymerizable material that includes (a) a first monomer that is an alkyl (meth)acrylate ester of a primary alcohol $R^1$-OH that has an iso index in a range of 2 to 4 and (b) a second monomer having an ethylenically unsaturated group. The first monomer is of Formula (I)

$$CH_2=C(R^2)-(CO)-OR^1 \qquad (I)$$

where $R^1$ is an alkyl having 14 to 25 carbon atoms and $R^2$ is hydrogen or methyl.

In a second aspect, an article is provided that includes (a) a pressure-sensitive adhesive composition as described above and (b) a substrate adhered to the pressure-sensitive adhesive composition.

**Detailed Description**

Pressure-sensitive adhesive compositions and articles containing the pressure-sensitive adhesives are provided. The pressure-sensitive adhesives contain a (meth)acrylic-based elastomeric material prepared using polymerizable material that includes (a) an alkyl (meth)acrylate having an alkyl group that is branched and that contains at least 14 carbon atoms and (b) at least one other ethylenically unsaturated monomer..

As used herein, the term "(meth)acrylate" refers to an acrylate, methacrylate, or both. The term "(meth)acrylic" refers to methacrylic, acrylic, or both. A "(meth)acrylic-based" material refers to one prepared using at least one monomer having a (meth)acryloyl group, which is a group of formula $CH_2=C(R^2)-(CO)-$ where $R^2$ is hydrogen or methyl. The term "(meth)acrylate ester" refers a monomer of formula $CH_2=C(R^2)-(CO)-OR^3$ where $R^3$ is an alkyl, heteroalkyl, alkenyl, or aryl. An alkyl, heteroalkyl, or alkenyl $R^3$ group can be substituted with an aryl, aryloxy, halo, or a combination thereof. An aryl $R^3$ group can be substituted with an alkyl, heteroalkyl, halo, alkoxy, aryloxy, or a combination thereof. The term "alkyl (meth)acrylate" or "alkyl (meth)acrylate ester" refers to a (meth)acrylate ester where $R^3$ is an alkyl group.

(Meth)acrylic-based elastomeric materials included in known pressure-sensitive adhesives are often prepared from one or more non-polar (meth)acrylate monomers with a relatively low glass transition temperature ($T_g$). The $T_g$ of a monomer is usually measured as a homopolymer prepared from the monomer. The one or more non-polar (meth)acrylate monomers are often combined with various optional monomers such as one or more polar monomers. The polar monomers are often selected to have an acidic group, a hydroxyl group, or a nitrogen-containing group.

Some widely used non-polar (meth)acrylate monomers in conventional (meth)acrylic-based elastomeric materials are alkyl (meth)acrylates such as 2-ethylhexyl acrylate (EHA) and isooctyl acrylate (IOA). Both of these alkyl acrylates have an alkyl group with eight carbon atoms (i.e., the monomers are $C_8$ alkyl acrylates). Alkyl (meth)acrylates having alkyl groups with more than eight carbon atoms or less than eight carbon atoms can have a number of disadvantages in terms of pressure-sensitive adhesive performance. For example, alkyl (meth)acrylates with shorter alkyl chains (e.g., butyl acrylate, which is a $C_4$ alkyl acrylate), tend to significantly increase both the $T_g$ and storage modulus of the elastomeric material. The room temperature storage modulus can increase above the useful range for a pressure-sensitive adhesive (e.g., about $3 \times 10^6$ dynes/cm²). That is, the resulting elastomeric material may have insufficient tackiness to be considered a pressure-sensitive adhesive. Alternatively, alkyl (meth)acrylates with longer alkyl chains such as longer linear alkyl chains (e.g., n-octadecyl acrylate, which is a $C_{18}$ alkyl acrylate), can lead to crystalline groups within the polymer. The presence of these crystalline groups can significantly reduce the tackiness of the elastomeric material and the adhesion performance of the formulated pressure-sensitive adhesive composition.

If the crystallization temperature ($T_c$) can be suppressed, alkyl (meth)acrylates having alkyl groups with a greater number of carbon atoms can be beneficial over conventional $C_8$ alkyl (meth)acrylates. Elastomeric materials are provided that are formed using an alkyl (meth)acrylate with an alkyl group that is branched and that contains at least 14 carbon atoms. These (meth)acrylic-based elastomeric materials can have a lower $T_g$, a lower plateau storage modulus, improved solubility (i.e., miscibility or compatibility) with hydrogenated tackifiers of low polarity, and improved adhesive strength (i.e., peel strength) on low surface energy substrates compared to elastomeric materials prepared using conventional $C_8$ alkyl (meth)acrylates.

In a first aspect, a pressure-sensitive adhesive composition is provided that includes a (meth)acrylic-based elastomeric material. The elastomeric material is a polymerized reaction product of polymerizable material that includes (a) a first monomer that is an alkyl (meth)acrylate ester of a primary alcohol $R^1$-OH and (b) a second monomer having an ethylenically unsaturated group. The alkyl (meth)acrylate ester used as the first monomer is of Formula (I)

$$CH_2=C(R^2)-(CO)-OR^1 \qquad (I)$$

where group $R^1$ is an alkyl group having 14 to 25 carbon atoms and the primary alcohol $R^1$-OH has an iso index in a range of 2 to 4. Group $R^2$ is hydrogen or methyl. In many embodiments, $R^2$ is hydrogen (i.e., the monomer of Formula (I) is an alkyl acrylate ester).

In Formula (I), the group $R^1$ is a branched alkyl group having 14 to 25 carbon atoms. The primary alcohol $R^1$-OH used to form the alkyl (meth)acrylate ester is often prepared using the oxo process. The oxo process is based on the hydroformylation of olefins made through the oligomerization of ethylene, propylene, butylene, or the like. Alcohols prepared using this process are typically branched primary alcohols with multiple branching locations. At each carbon atom branching point in group $R^1$, there is an attached ethyl or methyl group. In other words, where a first chain is branched into two second chains, at least one of the second chains is methyl or ethyl. One of the second chains is further branched into two third chains and at least one of the third chains is methyl or ethyl. Likewise, if any third chain is further branched into two fourth chains, at least one of the fourth chains is methyl or ethyl. In some embodiments, a majority (e.g., at least 50 percent, at least 60 percent, at least 70 percent, at least 80 percent, at least 90 percent, or at least 95 percent) of carbon atom branching points have an attached ethyl group.

Suitable oxo alcohols (i.e., alcohols prepared using the oxo process) are commercially available or can be prepared using the methods, for example, described in PCT Application Publication WO 2009/124979 A1 (Rudolph et al.). These oxo alcohols can be converted to alkyl (meth)acrylates by reaction with (meth)acrylic acid using methods such as those described, for example, in U.S. Patent Application Publication 2011/0130582 (Bette et al.). Some alkyl (meth)acrylate esters prepared from oxo alcohols such as alkyl (meth)acrylate esters with a $C_{17}$ alkyl group are commercially available from BASF (Ludwigshafen, DE). These $C_{17}$ alkyl (meth)acrylates are often a mixture of structural isomers.

The degree of branching (i.e., iso index) is defined as the number of methyl (-CH_3) groups in the primary alcohol $R^1$-OH minus 1. The average (mean) degree of branching is the average of all of the different degrees of branching for all of the primary alcohols $R^1$-OH present in a sample. The average degree of branching can be determined using $^1$H Nuclear Magnetic Resonance spectroscopic analysis of the alcohol or alcohol mixture. More specifically, each alcohol in the sample is reacted with trichloroacetyl isocyanate to form a carbamic ester. The average degree of branching is calculated using Equation 1.

$$\text{Iso index} = ((I(CH_3)/3)/(I(CH_2\text{-}OR)/2))\text{-}1 \qquad\qquad (1)$$

In Equation 1, the term $I(CH_3)$ refers to the total integration peak area corresponding to the methyl protons ($\delta$ is in the range of 0.70 to 0.95 ppm) and the term $I(CH_2\text{-}OR)$ refers to the total integration peak area of the methylene protons ($\delta$ is 3.9 to 4.5) in the derivatized primary alcohol. The term R refers to the remainder of the carbamic ester minus the $-OR^1$ group.

The iso index is usually in the range of 2 to 4. In some embodiments, the iso number is at least 2.2, at least 2.4, at least 2.6. at least 2.8, or at least 3. The iso index can be up to 3.8, up to 3.6, up to 3.4, up to 3.2, or up to 3. For example, the iso index can be in the range of 2.2 to 4, 2.2 to 3.8, 2.4 to 4, 2.4 to 3.8, 2.6 to 4, 2.6 to 3.8, 2.8 to 4, 2.8 to 3.8, 2.8 to 3.6, or 2.8 to 3.4.

A plurality of first monomers can be used in the formation of the (meth)acrylic-based elastomeric material. Stated differently, the first monomer can be a mixture of alkyl (meth)acrylate esters with different alkyl groups. The alkyl groups (i.e., group $R^1$ in Formula (I)) can vary in the number of carbon atoms, can be structural isomers, or both. Each alkyl group has 14 to 25 carbon atoms. For example, the number of carbon atoms can be in the range of 17 to 25, 17 to 21, 14 to 21, or 14 to 17.

In some embodiments, the plurality of first monomers of Formula (I) can be prepared from a plurality of the primary alcohols $R^1$-OH that are structural isomers. In some embodiments, at least 50 weight percent, at least 60 weight percent, at least 70 weight percent, at least 80 weight percent, at least 90 weight percent, at least 95 weight percent, at least 97 weight percent, at least 98 weight percent, at least 99 weight percent, or at least 99.5 weight percent of the primary alcohols are structural isomers. In some embodiments, the structural isomers have a group $R^1$ with 17 carbon atoms, 21 carbon atoms, or 25 carbon atoms.

Any suitable amount of each structural isomer can be present. In some embodiments of structural isomers, the plurality of different monomers of Formula (I) can be predominately a single monomer. For example, at least 50 weight percent, at least 60 weight percent, at least 70 weight percent, at least 90 weight percent, at least 95 weight percent, at least 98 weight percent, or at least 99 weight percent of the first monomers can be a particular structural isomer.

In other embodiments, the plurality of first monomers can be prepared from a plurality of primary alcohols $R^1$-OH with alkyl groups varying in the number of carbon atoms. More specifically, the alkyl groups have 14 to 25 carbon atoms. For example, the different alkyl groups can have 17 to 25,17 to 21, 14 to 21, or 14 to 17 carbon atoms. Any amount of each first monomer can be present. In some embodiments, the plurality of different monomers of Formula (I) can be predominately a single monomer. For example, at least 50 weight percent, at least 60 weight percent, at least 70 weight percent, at least 90 weight percent, at least 95 weight percent, at least 98 weight percent, or at least 99 weight percent of the first monomers can be a particular monomer.

A polymeric material prepared using the first monomer of Formula (I) as the only polymerizable material (e.g., a homopolymer formed from the first monomer) tends to have a low crystallization temperature ($T_c$). The crystallization temperature is often less than -80°C, less than -85°C, less than -90°C, or less than -95°C. The presence of the multiple branching points in the alkyl group $R^1$ is believed to contribute to this low crystallization temperature. Conventional alkyl (meth)acrylate monomers with linear rather than branched, long chain alkyl groups often have a much higher $T_c$. For example, lauryl acrylate with a linear $C_{12}$ alkyl group has a $T_c$ of -8°C when measured using Differential Scanning Calorimetric (DSC) analysis. A lower $T_c$ is typically desirable for pressure-sensitive adhesives.

A polymeric material prepared by polymerizing only the first monomer of Formula (I) (e.g., a homopolymer formed from the first monomer) tends to have a glass transition temperature less than - 40°C. For example, the $T_g$ can be less than -45°C, less than -50°C, less than -55°C, less than -60°C, or less than -65°C. The low $T_g$ is advantageous for preparation of elastomeric materials useable over a wide temperature range. The low $T_g$ may also facilitate conformity to substrates and increased adhesion to a wider assortment of substrate materials.

The number of carbon atoms and the degree of branching in the alkyl group $R^1$ can be varied to optimize the rheological properties of the elastomeric material. For example, as the number of carbon atoms is increased, some degree of branching (i.e., a larger iso index) is needed to maintain a low $T_c$. However, if the iso index is too high, the $T_g$ and the storage modulus of the elastomeric material will increase. If the $T_g$ and the storage modulus increase too much, the pressure-sensitive adhesive characteristics may be compromised.

Monomers of Formula (I) advantageously have a higher boiling point than conventionally used alkyl acrylate monomers with a $C_8$ alkyl group. A higher boiling point may result in the formation of a pressure-sensitive adhesive with a lower overall volatile content and odor compared to conventional (meth)acrylic-based pressure-sensitive adhesives.

Any suitable amount of the first monomer can be used to form the copolymeric (meth)acrylic-based elastomeric material. In some embodiments, at least 50 weight percent of the polymerizable material used to form the elastomeric material is a first monomer of Formula (I). For example, at least 60 weight percent, at least 65 weight percent, at least 70 weight percent, at least 75 weight percent, at least 80 weight percent, at least 85 weight percent, at least 90 weight percent, or at least 95 weight percent of the polymerizable material used to form the elastomeric material can be of Formula (I). In some embodiments, the first monomer of Formula (I) is present in an amount in a range of 50 to 99.5 weight percent, 50 to 99 weight percent, 60 to 99 weight percent, 60 to 95 weight percent, 70 to 99 weight percent, 70 to 95 weight percent, 80 to 99 weight percent, or 85 to 99 weight percent based on the total weight of polymerizable material used to form the elastomeric material.

The amount of the alkyl (meth)acrylate monomer of Formula (I) that can be added is typically greater than for other previously used alkyl (meth)acrylates having an alkyl group with at least 10 carbon atoms. When conventional alkyl (meth)acrylates having an alkyl group with at least 10 carbon atoms are used, crystallization of the polymeric material is induced. To prevent crystallization, the amount of these alkyl (meth)acrylates is typically in the range of less than 30 weight percent of the polymerizable material (e.g., in the range of 5 to 30 weight percent of the polymerizable material).

The (meth)acrylic-based elastomeric material included in the pressure-sensitive adhesive composition is a copolymer prepared from (a) the first monomer of Formula (I) and (b) a second monomer having an ethylenically unsaturated group. Any suitable second monomer with at least one ethylenically unsaturated group can be used in combination with the first monomer of Formula (I) to prepare the (meth)acrylic-based elastomeric material. Suitable second monomers include, but are not limited to, non-polar (meth)acrylate esters that are not of Formula (I), various other non-polar monomers such as various non-polar vinyl monomers without a (meth)acryloyl group, various polar monomers, crosslinkers with at least two polymerizable groups (i.e., ethylenically unsaturated groups), or a combination thereof. With the exception of crosslinkers, the second monomer typically has a single ethylenically unsaturated group.

The non-polar (meth)acrylate esters that are not of Formula (I) include, for example, alkyl (meth)acrylates with an alkyl group having 1 to 13 carbon atoms, alkyl (meth)acrylates with an alkyl group having at least 14 carbon atoms but with a iso number less than 2 (e.g., alkyl groups that are linear or that have a single branching point), alkenyl (meth)acrylates, aryl (meth)acrylates, aryl substituted alkyl (meth)acrylates, aryloxy substituted alkyl (meth)acrylates, and the like.

Alkyl (meth)acrylates with an alkyl group having 1 to 13 carbon atoms include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, n-pentyl (meth)acrylate, isopentyl (meth)acrylate (i.e., isoamyl (meth)acrylate), 3-pentyl (meth)acrylate, 2-methyl-1-butyl (meth)acrylate, 3-methyl-1-butyl (meth)acrylate, n-hexyl (meth)acrylate, isohexyl (meth)acrylate, 2-methyl-1-pentyl (meth)acrylate, 3-methyl-1-pentyl (meth)acrylate, 4-methyl-2-pentyl (meth)acrylate, 2-ethyl-1-b utyl (meth)acrylate, 2-methyl-1-hexyl (meth)acrylate, 3,5,5-trimethyl-1-hexyl (meth)acrylate, cyclohexyl (meth)acrylate, 3-heptyl (meth)acrylate, n-octyl (meth)acrylate, isooctyl (meth)acrylate, 2-octyl (meth)acrylate, 2-ethyl-1-hexyl (meth)acrylate, n-decyl (meth)acrylate, isodecyl (meth)acrylate, 2-propylheptyl (meth)acrylate, isononyl (meth)acrylate, n-dodecyl (meth)acrylate (i.e., lauryl (meth)acrylate), n-tridecyl (meth)acrylate, isotridecyl (meth)acrylate, 3,7-dimethyl-octyl (meth)acrylate, and the like.

Other suitable alkyl (meth)acrylate esters not of Formula (I) include those with an alkyl group having at least 14 carbon atoms but that are linear or that have a single branching point. Examples include, but are not limited to, 1-octadecyl (meth)acrylate, 17-methyl-1-heptadecyl (meth)acrylate, and 1-tetradecyl (meth)acrylate.

Still other suitable non-polar (meth)acrylate esters are aryl (meth)acrylates such as, for example, phenyl (meth)acrylate or benzyl (meth)acrylate; alkenyl (meth)acrylates such as, for example, 3,7-dimethyl-6-octenyl-1 (meth)acrylate and allyl (meth)acrylate; and aryl substituted alkyl (meth)acrylates or aryloxy substituted alkyl (meth)acrylates such as, for example, 2-biphenylhexyl (meth)acrylate, benzyl (meth)acrylate, and 2-phenoxy ethyl (meth)acrylate.

In some embodiments, it is desirable for the second monomer to have a relatively high $T_g$ when formed into a homopolymer (i.e., a polymer prepared using a single polymerizable material). These monomers can be added to modulate the $T_g$ of the elastomeric material to provide enhanced adhesive strength. When polymerized by itself, these second monomers often have a $T_g$ equal to at least 25°C, at least 30°C, at least 40°C, or at least 50°C. Suitable high $T_g$ monomers include, but are not limited to, methyl methacrylate, tert-butyl methacrylate, ethyl methacrylate, n-propyl methacrylate, isopropyl methacrylate, isobutyl methacrylate, tert-butyl methacrylate, stearyl methacrylate, phenyl methacrylate, cyclohexyl methacrylate, isobornyl (meth)acrylate, benzyl methacrylate, 3,3,5-trimethylcyclohexyl acrylate, cyclohexyl methacrylate, or combinations thereof.

If present, any of the non-polar (meth)acrylate esters that are not of Formula (I) can be present in any suitable amount. Such monomers can be present in amounts up to 50 weight percent based on a total weight of polymerizable material used to form the (meth)acrylic-based elastomeric material. The amount can be up to 45 weight percent, up to 40 weight percent, up to 30 weight percent, up to 20 weight percent, or up to 10 weight percent. For example, this monomer can be present in an amount in a range of 0 to 50 weight percent, 1 to 50 weight percent, 0 to 40 weight percent, 1 to 40 weight percent, 0 to 30 weight percent, 1 to 30 weight percent, 5 to 30 weight percent, 10 to 30 weight percent, 0 to 20 weight percent, 1 to 20 weight percent, 5 to 20 weight percent, 10 to 20 weight percent, 0 to 10 weight percent, 1 to 10 percent, or 5 to 10 weight percent.

The second monomer can include a monomer with an acidic group and a single ethylenically unsaturated group (i.e., an acidic monomer). These monomers are typically polar. The ethylenically unsaturated group can be a (meth)acryloyl group or a vinyl group (i.e., $CH_2=CH_2$- group) that is not a (meth)acryloyl group. Exemplary acidic monomers can have a carboxylic acid group, sulfonic acid group, phosphonic acid group, or salts thereof. Due to their availability, acidic monomers with carboxylic acid groups or salts thereof are often selected. If stronger acidic groups are desired, monomers with a phosphonic acid group, sulfonic acid group, or salt thereof can be used. Examples of acidic monomers include, but are not limited to, (meth)acrylic acid, itaconic acid, fumaric acid, crotonic acid, citraconic acid, maleic acid, oleic acid, beta-carboxyethyl (meth)acrylate, 2-sulfoethyl methacrylate, styrene sulfonic acid, 2-acrylamido-2-methylpropanesulfonic acid, vinylphosphonic acid, or mixtures thereof. Any suitable salt of an acidic group can be used. In many embodiments, the cation of the salt is an ion of an alkaline metal (e.g., sodium, potassium, or lithium ion), an ion of an alkaline earth (e.g., calcium, magnesium, or strontium ion), an ammonium ion, or an ammonium ion substituted with one or more alkyl or aryl groups.

Other suitable second monomers are those with a single ethylenically unsaturated group and a hydroxyl group. These monomers tend to be polar. The ethylenically unsaturated group can be a (meth)acryloyl group or a vinyl group (i.e., $CH_2=CH_2$- group) that is not a (meth)acryloyl group. Exemplary monomers with a hydroxyl group include, but are not limited to, hydroxyalkyl (meth)acrylates (e.g., 2-hydroxyethyl acrylate or 3-hydroxypropyl acrylate), hydroxyalkyl (meth)acrylamides (e.g., 2-hydroxyethyl acrylamide or 3-hydroxypropyl acrylamide), and ethoxylated hydroxyethyl methacrylate (e.g., monomers commercially available from Sartomer under the trade designation CD570, CD571, and CD572).

Still other suitable polar second monomers are those with a single ethylenically unsaturated group and a nitrogen-containing group or a salt thereof. Most of these monomers tend to be polar. The ethylenically unsaturated group can be a (meth)acryloyl group or a vinyl group (i.e., $CH_2=CH_2$- group) that is not a (meth)acryloyl group. Examples of the nitrogen-containing groups include, but at not limited to, secondary amido groups and tertiary amido groups. Exemplary polar monomers with secondary amido groups include, but are not limited to, N-alkyl (meth)acrylamides such as N-methyl acrylamide, N-ethyl acrylamide, N-isopropyl acrylamide, tert-octyl acrylamide, or N-octyl acrylamide. Exemplary polar monomers with a tertiary amido group include, but are not limited to, N-vinyl caprolactam, N-vinyl-2-pyrrolidone, acryloyl morpholine, and N,N-dialkyl acrylamides such as N,N-dimethyl acrylamide, N,N-diethyl acrylamide, N,N-dipropyl acrylamide, N,N-dibutyl acrylamide, and N,N-dialkylaminoalkyl (meth)acrylates such as N,N-dimethylaminoethyl (meth)acrylate.

Still other suitable polar second monomers are those with a single ethylenically unsaturated group and an ether group (i.e., a group containing at least one alkylene-oxy-alkylene group of formula -R-O-R-where each R is an alkylene having 1 to 4 carbon atoms) or a polyether group (i.e., a group with multiple alkylene-oxy-alkylene groups). These monomers tend to be polar. Exemplary monomers include, but are not limited to, alkoxylated alkyl (meth)acrylates such as ethoxyethoxyethyl acrylate, 2-methoxyethyl acrylate, and 2-ethoxyethyl acrylate; and poly(alkylene oxide) acrylates such as poly(ethylene oxide) acrylates and poly(propylene oxide) acrylates. The poly(alkylene oxide) acrylates are often referred to as poly(alkylene glycol) acrylates. These monomers can have any suitable end group such as a hydroxyl group or an alkoxy group. For example, when the end group is a methoxy group, the monomer can be referred to as methoxy poly(alkylene glycol) acrylate.

The various polar monomers can be added to increase adhesion of the pressure-sensitive adhesive to an adjacent layer such as backing layer or other type of substrate, to enhance the cohesive strength of the (meth)acrylic-based elastomeric material, or both. Any of the polar monomers or salt thereof can be present in any suitable amounts. In some embodiments, the polar monomers are present in amounts up to 15 weight percent based on a total weight of polymerizable material used to form the (meth)acrylic-based elastomeric material. This amount is often up to 10 weight percent or up to 5 weight percent. For example, the polar monomer can be present in an amount in a range of 0 to 15 weight percent, 0.5 to 15 weight percent, 1 to 15 weight percent, 0 to 10 weight percent, 0.5 to 10 weight percent, 1 to 10 weight percent, 0 to 5 weight percent, 0.5 to 5 weight percent, or 1 to 5 weight percent.

The composition used to form the pressure-sensitive adhesive polymer may further include one or more other vinyl monomers such as vinyl esters (e.g., vinyl acetate and vinyl propionate); styrene or derivatives thereof such as alkyl substituted styrene (e.g., α-methyl styrene); vinyl halides; or mixtures thereof. These monomers can be polar or non-polar. If present, these other vinyl monomer can be present in any suitable amount. In some embodiments, the vinyl monomers are present in an amount of up 5 weight percent based on a total weight of polymerizable material used to form the (meth)acrylic-based elastomeric material. For example, the vinyl monomer can be used in amounts up to 4 weight percent, up to 3 weight percent, or up to 2 weight percent. In some embodiments, the vinyl monomer is present in an amount in a range of 0 to 5 weight percent, 0.5 to 5 weight percent, 1 to 5 weight percent, 0 to 3 weight percent, or 1 to 3 weight percent.

A crosslinker having at least two ethylenically unsaturated groups can be used as a second monomer. Although there are other types of crosslinkers in addition to those suitable for use as a second monomer, the use of any type of crosslinker tends to increase the cohesive strength and the tensile strength of the (meth)acrylic-based elastomeric material.

Suitable crosslinkers for use as the second monomer often have multiple (meth)acryloyl groups. Crosslinkers with multiple (meth)acryloyl groups can be di(meth)acrylates, tri(meth)acrylates, tetra(meth)acrylates, penta(meth)acrylates, and the like. These crosslinkers can be formed, for example, by reacting (meth)acrylic acid with a polyhydric alcohol (i.e., an alcohol having at least two hydroxyl groups). The polyhydric alcohol often has two, three, four, or five hydroxyl groups. Mixtures of crosslinkers can be used.

In many embodiments, the crosslinkers contain two (meth)acryloyl groups. Exemplary crosslinkers with two (meth)acryloyl groups include 1,2-ethanediol diacrylate, 1,3-propanediol diacrylate, 1,9-nonanediol diacrylate, 1,12-dodecanediol diacrylate, 1,4-butanediol diacrylate, 1,6-hexanediol diacrylate, butylene glycol diacrylate, bisphenol A diacrylate, diethylene glycol diacrylate, triethylene glycol diacrylate, tetraethylene glycol diacrylate, tripropylene glycol diacrylate, polyethylene glycol diacrylate, polypropylene glycol diacrylate, polyethylene/polypropylene copolymer diacrylate, polybutadiene di(meth)acrylate, propoxylated glycerin tri(meth)acrylate, and neopentylglycol hydroxypivalate diacrylate modified caprolactone.

Exemplary crosslinkers with three or four (meth)acryloyl groups include, but are not limited to, trimethylolpropane triacrylate (e.g., commercially available under the trade designation TMPTA-N from Cytec Industries, Inc., Smyrna, GA and under the trade designation SR-351 from Sartomer, Exton, PA)), pentaerythritol triacrylate (e.g., commercially available under the trade designation SR-444 from Sartomer), tris(2-hydroxyethylisocyanurate) triacrylate (e.g., commercially available under the trade designation SR-368 from Sartomer), a mixture of pentaerythritol triacrylate and pentaerythritol tetraacrylate (e.g., commercially available from Cytec Industries, Inc., under the trade designation PETIA with an approximately 1:1 ratio of tetraacrylate to triacrylate and under the trade designation PETA-K with an approximately 3:1 ratio of tetraacrylate to triacrylate), pentaerythritol tetraacrylate (e.g., commercially available under the trade designation SR-295 from Sartomer), di-trimethylolpropane tetraacrylate (e.g., commercially available under the trade designation SR-355 from Sartomer), and ethoxylated pentaerythritol tetraacrylate (e.g., commercially available under the trade designation SR-494 from Sartomer). An exemplary crosslinker with five (meth)acryloyl groups includes, but is not limited to, dipentaerythritol pentaacrylate (e.g., commercially available under the trade designation SR-399 from Sartomer).

In some embodiments, the crosslinker is a polymeric material that contains at least two (meth)acryloyl groups. For example, the crosslinker can be poly(alkylene oxides) with at least two acryloyl groups (e.g., polyethylene glycol diacrylates commercially available from Sartomer such as SR210, SR252, and SR603) or polyurethanes with at least two (meth)acryloyl groups (e.g., polyurethane diacrylates such as CN9018 from Sartomer). As the molecular weight of the crosslinker increases, the resulting (meth)acrylic-based elastomeric material tends to have a higher elongation before breaking. Polymeric crosslinkers tend to be used in greater weight percent amounts compared to their non-polymeric counterparts.

Other types of crosslinkers can be used rather than those having at least two ethylenically unsaturated groups. One type of crosslinker can have multiple groups that react with functional groups (i.e., functional groups that are not ethylenically unsaturated groups) such as acidic groups on the second monomers. For example, crosslinkers with multiple aziridinyl groups can be used that are reactive with carboxyl groups. Exemplary crosslinkers include bis-amide crosslinkers as described in US Patent 6,777,079 (Zhou et al.). These crosslinkers are not considered to be second monomers.

In other methods of crosslinking, photocrosslinkers (e.g., UV photocrosslinkers) are added. Although some photocrosslinkers have ethylenically unsaturated groups and can be used as the second monomer, most photoinitiators do not have ethylenically unsaturated groups and are not considered to be a second monomer. The photocrosslinkers without ethylenically unsaturated groups are often added after polymerization or after at least some polymerization has occurred. For example, the photocrosslinker can be added after the monomers (e.g., monovalent monomers) have been partially polymerized to form a viscous, syrup-like composition. Suitable photocrosslinkers added after polymerization or partial polymerization include, for example, multifunctional benzophenones, triazines (such as XL-330, which is 2,4,-bis(trichloromethyl)-6-(4-methoxyphenyl)-triazine from 3M Company, Saint Paul, MN), acetophenones, and the like.

If present and regardless of the specific mechanism of crosslinking, any of the crosslinkers can be used in any suitable amount. In many embodiments, the crosslinker is present in an amount of up to 5 parts by weight based on a total weight of polymerizable material. In some embodiments, the crosslinker is present in an amount up to 4 weight percent, up to 3 weight percent, up to 2 weight percent, or up to 1 weight percent. The crosslinker can be present, for example, in amounts greater than 0.01 weight percent, greater than 0.05 weight percent, or greater than 1 weight percent. In some embodiments, the crosslinker is present in an amount in a range of 0 to 5 weight percent, 0.01 to 5 weight percent, 0.05 to 5 weight percent, 0 to 3 weight percent, 0.01 to 3 weight percent, 0.05 to 3 weight percent, 0 to 1 weight percent, 0.01 to 1 weight percent, or 0.05 to 1 weight percent.

As an alternative to adding crosslinkers (including photocrosslinkers), the (meth)acrylic-based elastomeric material can be crosslinked using high energy electromagnetic radiation such as gamma radiation or electron beam radiation.

In some embodiments, the (meth)acrylic-based elastomeric material is prepared from at least 50 weight percent of the first monomer of Formula (I) and up to 50 weight percent of the second monomer based on a total weight of polymerizable material. The second monomer can be any of those described above. For example, the second monomer can be a non-polar (meth)acrylate ester that is not of Formula (I), a non-polar vinyl monomer without a (meth)acryloyl group, a polar monomer, a crosslinker with at least two ethylenically unsaturated groups, or a combination thereof. Some (meth)acrylic-based elastomeric materials are formed from 50 to 99.5 weight percent of the first monomer and 0.5 to 50 weight percent of the second monomer, 50 to 99 weight percent of the first monomer and 1 to 50 weight percent of the second monomer, 60 to 99 weight percent of the first monomer and 1 to 40 weight percent of the second monomer, 70 to 99 weight percent of the first monomer and 1 to 30 weight percent of the second monomer, 80 to 99 weight percent of the first monomer and 1 to 20 weight percent of the second monomer, 85 to 99 weight percent of the first monomer and 1 to 15 weight percent of the second monomer, or 90 to 99 weight percent of the first monomer and 1 to 10 weight percent of the second monomer. The weight percent is based on a total weight of polymerizable material used to form the (meth)acrylic-based elastomeric material.

In some more specific embodiments, the (meth)acrylic-based elastomeric material is prepared from a polymerizable material that includes at least 50 weight percent of the first monomer of Formula (I) and up to 15 weight percent of a second monomer that is a polar monomer. For example, the polymerizable material can include 50 to 99.5 weight percent of the monomer of Formula (I) and 0.5 to 15 weight percent of the polar monomer monomer, 50 to 99 weight percent of the monomer of Formula (I) and 1 to 15 weight percent of the polar monomer, 60 to 99 weight percent of the monomer of Formula (I) and 1 to 15 weight percent of the polar monomer, 70 to 99 weight percent of the monomer of Formula (I) and 1 to 15 weight percent of the polar monomer, 80 to 99 weight percent of the monomer of Formula (I) and 1 to 15 weight percent of the polar monomer, or 85 to 99 weight percent of the monomer of Formula (I) and 1 to 15 weight percent of the polar monomer. Other non-polar monomers not of Formula (I), crosslinkers with at least two ethylenically unsaturated groups, or both can be added to any of these polymerizable materials to bring the total to 100 weight percent. For example, the polymerizable material can include at least 1 weight percent non-polar monomers not of Formula (I) such as 1 to 40 weight percent, 1 to 35 weight percent, 1 to 30 weight percent, 1 to 20 weight percent, or 1 to 10 weight percent. As another example, any of the polymerizable materials can include up to 5 weight percent crosslinker with at least two ethylenically unsaturated group such as 0.01 to 5 weight percent, 0.05 to 5 weight percent, or 1 to 5 weight percent. The weight percent is based on a total weight of polymerizable material used to form the (meth)acrylic-based elastomeric material.

An initiator for free radical polymerization is typically added to the various monomers used to form the (meth)acrylic-based elastomeric material. The polymerization initiator can be a thermal initiator, a photoinitiator, or both. Any suitable thermal initiator or photoinitator known for free radical polymerization reactions can be used. The initiator is typically present in an amount in the range of 0.01 to 5 weight percent, in the range of 0.01 to 2 weight percent, in the range of 0.01 to 1 weight percent, or in the range of 0.01 to 0.5 weight percent based on a total weight of polymerizable material in the first polymerizable mixture.

As used herein, the polymerizable mixture (i.e., polymerizable reaction mixture) refers to the polymerizable material plus any other components added to the polymerizable materials to prepare the polymerized product.

In some embodiments, a thermal initiator is used. Thermal initiators can be water-soluble or water-insoluble (i.e., oil-soluble) depending on the particular polymerization method used. Suitable water-soluble initiators include, but are not limited to, persulfates such as potassium persulfate, ammonium persulfate, sodium persulfate, and mixtures thereof; an oxidation-reduction initiator such as the reaction product of a persulfate and a reducing agent such as a metabisulfite (e.g., sodium metabisulfite) or a bisulfate (e.g., sodium bisulfate); or 4,4'-azobis(4-cyanopentanoic acid) and its soluble salts (e.g., sodium or potassium). Suitable oil-soluble initiators include, but are not limited to, various azo compound such as those commercially available under the trade designation VAZO from E. I. DuPont de Nemours Co. including VAZO 67, which is 2,2'-azobis(2-methylbutane nitrile), VAZO 64, which is 2,2'-azobis(isobutyronitrile), and VAZO 52, which is (2,2'-azobis(2,4-dimethylpentanenitrile); and various peroxides such as benzoyl peroxide, cyclohexane peroxide, lauroyl peroxide, and mixtures thereof.

In many embodiments, a photoinitiator is used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ) or under the trade designation ESACURE KB-1 from Sartomer (Exton, PA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxycyclohexyl phenyl ketone (IRGACURE 184), bis(2,4,6-trimethylbenzoyl)phenylphosphineoxide (IRGACURE 819), 1-[4-(2-hydroxyethoxy)phenyl]-2-hydroxy-2-methyl-1-propane-1-one (IRGACURE 2959), 2-benzyl-2-dimethylamino-1-(4-morpholinophenyl)butanone (IRGACURE 369), 2-methyl-1-[4-(methylthio)phenyl]-2-morpholinopropan-1-one (IRGACURE 907), and 2-hydroxy-2-methyl-1-phenyl propan-1-one (DAROCUR 1173).

The polymerizable mixture may optionally further contain a chain transfer agent to control the molecular weight of the resultant elastomeric material. Examples of useful chain transfer agents include, but are not limited to, carbon tetrabromide, alcohols, mercaptans such as isooctylthioglycolate, and mixtures thereof. If used, the polymerizable mixture may include up to 0.5 weight of a chain transfer agent based on a total weight of polymerizable material. For example, the polymerizable mixture can contain 0.01 to 0.5 weight percent, 0.05 to 0.5 weight percent, or 0.05 to 0.2 weight percent chain transfer agent.

The polymerizable mixture used to form the (meth)acrylic-based elastomeric material can include a organic solvent or can be either free or essentially free of an organic solvent. As used herein, the term "essentially free" in reference to an organic solvent means that the organic solvent is present in an amount less than 5 weight percent, less than 4 weight percent, less than 3 weight percent, less than 2 weight percent, or less than 1 weight percent based on the weight of the polymerizable mixture or polymerizable material. If an organic solvent is included in the polymerizable mixture, the amount is often selected to provide the desired viscosity. Examples of suitable organic solvents include, but are not limited to, methanol, tetrahydrofuran, ethanol, isopropanol, heptane, acetone, methyl ethyl ketone, methyl acetate, ethyl acetate, toluene, xylene, and ethylene glycol alkyl ether. Those solvents can be used alone or as mixtures thereof.

The (meth)acrylic-based elastomeric material can be prepared by a variety of conventional free radical polymerization methods, including solution, bulk (i.e., with little or no solvent), dispersion, emulsion, and suspension processes. The particular method used may be influenced by the use of the final pressure-sensitive adhesive composition. The resulting (meth)acrylic-based elastomeric materials can be random or block copolymers. In many embodiments, the (meth)acrylic-based elastomeric material is a random copolymer.

To be useful as a pressure-sensitive adhesive, the elastomeric material typically has a storage modulus less than 300,000 Pascals at 25°C. The storage modulus of the (meth)acrylic-based elastomeric material usually is no greater than 200,000 Pascals, no greater than 100,000 Pascals, no greater than 80,000 Pascals, no greater than 50,000 Pascals, or no greater than 25,000 Pascal at 25°C. For example, the storage modulus can be no greater than 10,000 Pascals, no greater than 9,000 Pascals, no greater than greater than 8,000 Pascals, or no greater than 7,500 Pascals at 25°C.

An elastomeric material with a lower storage modulus is often used to provide a pressure-sensitive adhesive that is readily conformable to a substrate, that can form a rapid bond with the substrate, and that has good peel adhesion performance. However, a lower storage modulus material generally has less internal or cohesive strength and crosslinking may be needed to provide sufficient shear holding power or clean removability of the pressure-sensitive adhesive. Depending on the particular use of the pressure-sensitive adhesive, the base elastomeric material is often selected based on the desired performance characteristics such as greater cohesive strength or greater conformability and rapid bond strength. For example, applications in which the PSA needs to quickly conform and bond to a rough or otherwise diffcult to adhere to substrate, a low modulus elastomeric material may be chosen to elicit these properties in the final formulated PSA.

In some embodiments, the (meth)acrylic-based elastomeric materials themselves may function as a pressure-sensitive adhesive. In other embodiments, one or more tackifiers, one or more plasticizers, or a mixture thereof can be combined with the elastomeric materials. Tackifiers (i.e., tackifying agents or tackifying resins) and plasticizers (i.e., plasticizing agents) are often added to modulate the $T_g$, modulate the storage modulus, and to alter the tackiness of the pressure-sensitive adhesive.

Any tackifiers that are included in the pressure-sensitive adhesive compositions are typically selected to be miscible with the (meth)acrylic-based elastomeric material. Any tackifier typically included in conventional pressure-sensitive adhesive compositions can be used. Either solid or liquid tackifiers can be added. Solid tackifiers generally have a number average molecular weight (Mn) of 10,000 grams per mole or less and a softening point above about 70°C. Liquid tackifiers are viscous materials that have a softening point of about 0°C to about 70°C.

Suitable tackifying resins include rosin resins such as rosin acids and their derivatives (e.g., rosin esters); terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the pressure-sensitive adhesive composition. Combinations of various tackifiers can be used, if desired.

Tackifiers that are rosin esters are the reaction products of various rosin acids and alcohols. These include, but are not limited to, methyl esters of rosin acids, triethylene glycol esters of rosin acids, glycerol esters of rosin acids, and pentaertythritol esters of rosin acids. These rosin esters can be hydrogenated partially or fully to improve stability and reduce their color contribution to the pressure-sensitive adhesive composition. The rosin resin tackifiers are commercially available, for example, from Eastman Chemical Company under the trade designations PERMALYN, STAYBELITE, and FORAL as well as from Newport Industries under the trade designations NUROZ and NUTAC. A fully hydrogenated rosin resin is commercially available, for example, from Eastman Chemical Company under the trade designation FORAL AX-E. A partially hydrogenated rosin resin is commercially available, for example, from Eastman Chemical Company under the trade designation STAYBELITE-E.

Tackifiers that are hydrocarbon resins can be prepared from various petroleum-based feed stocks. There feedstocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopenetadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color and thermal stability.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley under the trade designations NORSOLENE, from Ruetgers N.V. under the trade designation NOVAREZ, and from Kolon Industries, Inc. under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREX that are 50 to 100 percent (e.g., 50 percent, 70 percent, 90 percent, and 100 percent) hydrogentated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobile Chemical under the trade designation ESCOREZ, and from Newport Industries under the trade designations NURES and H-REZ.

The high solubility parameter of most conventional (meth)acrylic-based elastomeric materials and the presence of specific potential interactions between these elastomeric materials and many tackifiers have limited the tackifiers that are suitable for use in many conventional pressure-sensitive adhesive compositions. As a class, the C5-based hydrocarbon resins and C9-based hydrocarbon resins, and especially hydrogenated versions of these hydrocarbon resins, have been considered unsuitable for use with most conventional (meth)acrylic-based elastomeric materials. That is, there is a solubility mismatch between the relatively polar conventional (meth)acrylic-based elastomeric materials and the non-polar hydrogenated hydrocarbon resin tackifiers.

In contrast to conventional (meth)acrylic-based elastomeric material, the (meth)acrylic-based elastomeric materials prepared using a monomer of Formula (I) have greater compatibility with petroleum-based resins such as the C5-based hydrocarbon resins, the C9-based hydrocarbon resin, the C5/C9-based hydrocarbon resins, and hydrogenated versions of any of these resins. The resulting pressure-sensitive adhesive can appear clear and can remain clear even after aging at temperatures such as 70°C for 1 week.

Based on solubility considerations, the rosin ester tackifiers and selected terpene resins such as phenol-modified terpene and alpha-pinene based resins have performed well in pressure-sensitive adhesive compositions containing conventional (meth)acrylic-based elastomeric materials. However, some problems are still associated with the use of these tackifiers. For example, pressure-sensitive adhesive compositions containing these tackifiers are often discolored or yellow. The yellow appearance is a direct result of the distinct yellow tinge inherent in many of these tackifiers. Upon aging (e.g., at 70°C for 1 week) and exposure to light, this discoloration can become even more pronounced, even with lighter colored grades of resin. (Meth)acrylic-based pressure-sensitive adhesives without tackifiers typically have excellent aging properties. The yellow appearance can often be minimized by hydrogenation of the tackifiers but the resulting hydrogenated resins are often not as compatible with conventional (meth)acrylic-based elastomers as their non-hydrogenated equivalents.

Tackified pressure-sensitive adhesives containing conventional (meth)acrylic-based elastomeric materials can also appear cloudy, demonstrating a loss in the characteristic transparency of the conventional (meth)acrylic-based elastomeric materials. The cloudiness is an indication of limited or incomplete compatibility of the tackifier and the elastomeric material. The reduced compatibility can lead to a degradation of adhesive properties, as evidenced by a loss of tack or reduced peel adhesion on aging. In some cases, the addition of a tackifier to a pressure-sensitive adhesive composition having acrylic monomers, polymers, oligomers, and any mixture thereof, can be clear and appear to be compatible. However, after removing the solvent, curing, or aging, the pressure-sensitive adhesive can become cloudy, which indicates at least some incompatibility between the tackifier and the conventional (meth)acrylic-based elastomeric material.

In addition to these losses in clarity and stability of tackified pressure-sensitive adhesive compositions, other deleterious effects can be observed when tackifiers are present during the polymerization reaction used to form the conventional (meth)acrylic-based elastomeric materials. Depending on the structure of the tackifier, undesirable effects of adding a tackifier include the inhibition or retardation of the polymerization reaction and/or the alteration of the final polymer structure if the tackifier acts as a chain-transfer or chain-terminating agent. Such effects can adversely influence the performance and stability of elastomeric materials prepared in the presence of these tackifiers. Chain termination can also result in undesirably high residual volatile materials. These effects can be minimized or eliminated through the use of hydrogenated tackifiers that do not have ethylenically unsaturated groups.

The (meth)acrylic-based esters formed using an alkyl (meth)acrylate of Formula (I) are typically compatible with (i.e., miscible with) hydrogenated tackifiers. The hydrogenated tackifiers can be at least partially hydrogenated to remove any double bonds that are not part of a ring structure. That is, the tackifiers can be hydrogenated such that they are at least free of ethylenically unsaturated bonds. In some embodiments, the hydrogenated tackifiers have ring structures that are unsaturated. These tackifiers are only partially hydrogenated and may contain, for example, aromatic rings. In other embodiments, any double bonds that are not part of a ring structure plus at least some of the double bonds in ring structures are hydrogenated. In still other embodiments, the tackifiers are fully hydrogenated including any ring structures. The hydrogenated tackifiers can be, for example, hydrogenated terpene resins, hydrogenated rosin resins, hydrogenated C5-based hydrocarbon resins, hydrogenated C9-baed hydrocarbon resins, or combinations thereof.

The use of the elastomeric materials prepared using alkyl acrylates of Formula (I) are more compatible with hydrogenated tackifiers and, in particular, are more combatible with fully hydrogenated tackifiers. Compared to conventional (meth)acrylic-based elastomeric materials prepared from $C_8$ alkyl acrylates, these pressure-sensitive adhesive often have a higher clarity after curing and/or after aging at 70°C for 1 week. The higher clarity tends to indicate improved compatibility between the elastomeric material and the tackifier. This improved compatibility is often reflected in improved adhesive strength (e.g., as measured using 180 degree peel strength) and improved shear holding force.

Any of the tackifiers may be used in amounts of up to 150 parts relative to 100 parts of the (meth)acrylic-based elastomeric material. For example, the tackifiers can be used in amounts up to 125 parts, up to 100 parts, up to 80 parts, up to 60 parts, or up to 40 parts. The amount of tackifier can be for example, in the range of 1 to 150 parts, 5 to 150 parts, 10 to 150 parts, 20 to 150 parts, 20 to 100 parts, 50 to 150 parts, 50 to 100 parts, or 20 to 80 parts based on 100 parts of the (meth)acrylic-based elastomeric material.

Some pressure-sensitive adhesive compositions can include one or more plasticizers. The plasticizer is typically selected to be compatible with (i.e., miscible with) the other components in the composition such as the (meth)acrylic elastomeric material and any optional tackifier. Suitable plasticizers include, but are not limited to, various polyalkylene oxides (e.g., polyethylene oxides or propylene oxides), adipic acid esters, formic acid esters, phosphoric acid esters, benzoic acid esters, phthalic acid esters, sulfonamides, and naphthenic oils. The plasticizers can be used in any desired amount such as in a range of 0 to 100 weight percent or in the range of 1 to 100 weight percent based on a weight of the (meth)acrylic-based elastomeric material. For example, the plasticizer can be in a range of 1 to 50 weight percent, 5 to 50 weight percent, 1 to 25 weight percent, 5 to 25 weight percent, or 1 to 10 weight percent based on the weight of the (meth)acrylic-based elastomeric material.

The polymerizable mixture can further include other optional components such as, for example, pigments, glass beads, polymer beads (e.g., expandable beads or expanded beads), hydrophobic or hydrophilic silica, calcium carbonate, fibers (e.g., glass, polymeric material, ceramic material, or mixtures thereof), blowing agents, fire retardants, oxidants, and stabilizers. These optional components can be added in any amount sufficient to obtained the desired end properties.

In some methods of preparing the pressure-sensitive adhesive, the polymerizable mixture containing the monomers used to form the (meth)acrylic-based elastomeric material are partially polymerized to increase the viscosity to that corresponding to a syrup-like material. Often, the alkyl (meth)acrylate monomer of Formula (I) and any monovalent second monomers are mixed with a portion of the free radical polymerization initiator. Depending on the type of initiator added, the mixture is exposed to actinic radiation or heat to partially polymerize the monovalent monomers (i.e., monomers with a single ethylenically unsaturated group). Then, the crosslinker or photocrosslinker and any remaining portion of the initiator are added to the syrup-like, partially polymerized material. Optional tackifiers and plasticizers can also be combined with the partially polymerized material. The resulting mixture can be more readily applied as a coating composition onto a support (e.g., release liner) or another layer (e.g., backing layer). The coating layer can then be exposed to actinic radiation if a photoinitiator is present or to heat if a thermal initiator is present. Exposure to actinic radiation or heat results in the further reaction of polymerizable material within the coating composition.

The pressure-sensitive adhesive compositions can be coated upon a variety of substrates to produce adhesive-coated articles. The substrates can be flexible or inflexible and can be formed of a polymeric material, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polymethyl(meth)acrylate (PMMA), cellulose acetate, cellulose triacetate, and ethyl cellulose. Foam backings may be used. Examples of other substrates include, but are not limited to, metal such as stainless steel, metal or metal oxide coated polymeric material, metal or metal oxide coated glass, and the like.

The pressure-sensitive adhesive compositions may be used in any article conventionally known to use such compositions such as labels, tapes, signs, covers, marking indices, display components, touch panels, and the like. Flexible backing materials having microreplicated surfaces are also contemplated.

The pressure-sensitive adhesive compositions can be coated on a substrate using any conventional coating techniques modified as appropriate to the particular substrate. For example, these compositions can be applied to a variety of solid substrates by methods such as roller coating, flow coating, dip coating, spin coating, spray coating, knife coating, and die coating. These various methods of coating allow the compositions to be placed on the substrate at variable thicknesses thus allowing a wider range of use of the compositions.

Any suitable thickness can be used for the pressure-sensitive adhesive layer or layers. In many embodiments, each pressure-sensitive adhesive layer has a thickness no greater than 20 mils (500 micrometers), no greater than 10 mils (250 micrometers), no greater than 5 mils (125 micrometers), no greater than 4 mils (100 micrometers), no greater than 3 mils (75 micrometers), or no greater than 2 mils (50 micrometers). The thickness of the pressure-sensitive adhesive layer is often at least 0.5 mils (12.5 micrometers) or at least 1 mil (25 micrometers). For example, the thickness of the pressure-sensitive adhesive layer can be in the range of 0.5 mils (2.5 micrometers) to 20 mils (500 micrometers), in the range of 0.5 mils (5 micrometers) to 10 mils (250 micrometers), in the range of 0.5 mils (12.5 micrometers) to 5 mils (125 micrometers), in the range of 1 mil (25 micrometers) to 3 mils (75 micrometers), or in the range of 1 mil (25 micrometers) to 2 mils (50 micrometers).

The pressure-sensitive adhesive compositions can be particularly useful for forming strong adhesive bonds to low surface energy (LSE) substrates. As used herein, low surface energy substrates are those having a surface energy of less than 45 dynes per centimeter, more typically less than 40 dynes per centimeter, and most typically less than 35 dynes per centimeter. The surface energy is typically determined from contact angle measurements as described, for example, in ASTM D7490-08. Included among such materials are polypropylene, polyethylene (e.g., high density polyethylene or HDPE), polystyrene, and poly(methyl methacrylate) (PMMA). Other substrates may also have properties of low surface energy due to a residue, such as an oil residue or a film, such as paint, being on the surface of the substrate. However, even though the pressure-sensitive adhesives bond well to low surface energy surfaces, the use of these adhesives is not limited to low surface energy substrates. The pressure-sensitive adhesives typically bond well to higher surface energy substrates such as, for example, other plastics, ceramics, glasses, and metals.

The substrate to which the pressure-sensitive adhesive composition can be applied is selected depending on the particular application. For example, the adhesive can be applied to sheeting products (e.g., decorative graphics and reflective products), label stock, and tape backings. Additionally, the adhesive may be applied directly onto other substrates such as a panel (e.g., a metal panel such as an automotive panel) or a glass window so that yet another substrate or object can be attached to the panel or window.

The pressure-sensitive adhesive composition can also be provided in the form of a pressure-sensitive adhesive transfer tape in which at least one layer of the adhesive is disposed on a release liner for application to a permanent substrate at a later time. The pressure-sensitive adhesive composition can also be provided as a single coated or double coated tape in which the adhesive is disposed on a permanent backing. Backings can be made from plastics (e.g., polypropylene, including biaxially oriented polypropylene, vinyl, polyethylene, polyester such as polyethylene terephthalate), nonwovens (e.g., papers, cloths, nonwoven scrims), metal foils, foams (e.g., polyacrylic, polyethylene, polyurethane, neoprene), and the like. Foams are commercially available from various suppliers such as 3M Co., Voltek, Sekisui, and others. The foam may be formed as a coextruded sheet with the pressure-sensitive adhesive composition on one or both sides of the foam, or the pressure-sensitive adhesive composition may be laminated to it. When the adhesive is laminated to the substrate, it may be desirable to treat the surface of the substrate to improve the adhesion. Such treatments are typically selected based on the nature of the materials in the pressure-sensitive adhesive composition and of the substrate and include primers and surface modifications (e.g., corona treatment and surface abrasion).

For a single-sided tape, the pressure-sensitive adhesive is applied to one surface of the backing material and a suitable release material is applied to the opposite surface of the backing material. Release materials are known and include materials such as, for example, silicones, polyethylenes, polycarbamates, polyacrylics, and the like. For double coated tapes, the pressure-sensitive adhesive is applied to one surface of the backing material and a second adhesive is disposed on the opposite surface of the backing material. The second adhesive can be identical to the pressure-sensitive adhesive (i.e., the pressure-sensitive includes a (meth)acrylic-based elastomeric material formed using (2-isopropyl-5-methyl)hexyl (meth)acrylate), can be similar to the pressure-sensitive adhesive (e.g., the same (meth)acrylic-based elastomeric material in a different formulation), or can be different than the pressure-sensitive adhesive (a different type of adhesive or a different (meth)acrylic-based elastomeric material). Double coated tapes are often carried on a release liner.

Various items are provided that are pressure-sensitive adhesive compositions or articles that contain the pressure-sensitive adhesive composition.

Item 1 is a pressure-sensitive adhesive composition comprising an (meth)acrylic-based elastomeric material comprising a reaction product of polymerizable material. The polymerizable material includes (a) a first monomer that is an alkyl (meth)acrylate ester of a primary alcohol $R^1$-OH and (b) a second monomer having an ethylenically unsaturated group. The alkyl (meth)acrylate ester is of Formula (I).

$$CH_2=C(R^2)-(CO)-OR^1 \qquad (I)$$

In Formula (I), group $R^1$ is an alkyl having 14 to 25 carbon atoms and the primary alcohol $R^1$-OH has an iso number equal to at least 2 but no greater than 4. The group $R^2$ is hydrogen or methyl.

Item 2 is the pressure-sensitive adhesive of item 1, wherein the first monomer comprises a plurality of different alkyl (meth)acrylate esters of Formula (I).

Item 3 is the pressure-sensitive adhesive of item 1 or 2, wherein the first monomer comprises a plurality of structural isomers of Formula (I).

Item 4 is the pressure-sensitive adhesive of any one of items 1 to 3, wherein each $R^1$ has 17 to 21 carbon atoms.

Item 5 is the pressure-sensitive adhesive of any one of items 1 to 4, wherein each $R^1$ has 17 carbon atoms.

Item 6 is the pressure-sensitive adhesive of any one of items 1 to 5, wherein the second monomer comprises a non-polar (meth)acrylate ester that is not of Formula (I), a non-polar vinyl monomer without a (meth)acryloyl group, a polar monomer, a crosslinker with at least two ethylenically unsaturated groups, or a combination thereof.

Item 7 is the pressure-sensitive adhesive of item 6, wherein the polar monomer comprises an acidic group, a hydroxyl group, or a nitrogen-containing group.

Item 8 is the pressure-sensitive adhesive of item 7, wherein the acidic group is a carboxyl group or a salt thereof.

Item 9 is the pressure-sensitive adhesive of any one of items 1 to 8, wherein the polymerizable material comprises at least 50 to 99.5 weight percent of the alkyl (meth)acrylate ester of Formula (I) and 0.5 to 50 weight percent of the second monomer based on a total weight of polymerizable material.

Item 10 is the pressure-sensitive adhesive of any one of items 1 to 8, wherein the polymerizable material comprises at least 50 weight percent of the alkyl (meth)acrylate ester of Formula (I) and up to 15 weight percent of a polar monomer based on a total weight of polymerizable material.

Item 11 is the pressure-sensitive adhesive of item 10, further comprising at least 1 weight percent of a non-polar monomer not of Formula (I).

Item 12 is the pressure-sensitive adhesive of item 10 or 11, further comprising up to 5 weight percent of a crosslinker.

Item 13 is the pressure-sensitive adhesive of any one of items 1 to 12, wherein the pressure-sensitive adhesive further comprises a tackifier.

Item 14 is the pressure-sensitive adhesive of item 13, wherein the tackifier comprises a C5-based hydrocarbon resin, a C9-based hydrocarbon resin, a C5/C9-based hydrocarbon resin, or a mixture thereof.

Item 15 is the pressure-sensitive adhesive of item 13, wherein the tackifier comprises a hydrogenated terpene resin, a hydrogenated rosin resin, a hydrogenated C5-based hydrocarbon resin, a hydrogenated C9-based hydrocarbon resin, a hydrogenated C5/C9-based hydrocarbon resin, or a mixture thereof.

Item 16 is the pressure-sensitive adhesive of any one of items 13 to 15, wherein the pressure-sensitive adhesive comprises 1 to 150 part tackifier for 100 parts (meth)acrylic-based elastomeric material.

Item 17 is an article that includes a pressure-sensitive adhesive composition and a substrate adhered to the pressure-sensitive adhesive. The pressure-sensitive adhesive composition comprises an (meth)acrylic-based elastomeric material comprising a reaction product of polymerizable material. The polymerizable material includes (a) a first monomer that is an alkyl (meth)acrylate ester of a primary alcohol $R^1$-OH and (b) a second monomer having an ethylenically unsaturated group. The alkyl (meth)acrylate ester is of Formula (I).

$$CH_2=C(R^2)-(CO)-OR^1 \qquad (I)$$

In Formula (I), group $R^1$ is an alkyl having 14 to 25 carbon atoms and the primary alcohol $R^1$-OH has an iso number equal to at least 2 but no greater than 4. The group $R^2$ is hydrogen or methyl.

Item 18 is an article of item 17, wherein the pressure-sensitive adhesive further comprises 1 to 150 part tackifier for 100 parts (meth)acrylic-based elastomeric material.

Item 19 is an article of item 18, wherein the tackifier comprises a C5-based hydrocarbon resin, a C9-based hydrocarbon resin, a C5/C9-based hydrocarbon resin, or a mixture thereof.

Item 20 is an article of item 18, wherein the tackifier comprises a hydrogenated terpene resin, a hydrogenated rosin resin, a hydrogenated C5-based hydrocarbon resin, a hydrogenated C9-based hydrocarbon resin, a hydrogenated C5/C9-based hydrocarbon resin, or a mixture thereof.

## EXAMPLES

Unless otherwise noted, all chemicals used in the examples can be obtained from Aldrich.

**Table 1:** Alkyl acrylate monomers

| Monomer Designation | Monomer Description | Carbons in Alkyl Group | Degree of Branching: Iso Index |
|---|---|---|---|
| EHA | 2-ethylhexyl acrylate (obtained from Aldrich) | 8 | 1.00 |
| PHA | 2-propylheptyl acrylate (obtained from BASF) | 10 | 1.00 |
| LA | lauryl acrylate (obtained from Sartomer) | 12 | 0 |
| PE1 | Alkyl acrylate synthesized in Preparatory Example 1 using EXXAL 13 (Exxon Mobile) as the alcohol | 13 | 3.04 |
| PE2 | Alkyl acrylate synthesized in Preparatory Example 2 using NEODOL 23 (Air Products and Chemicals, Inc.) as the alcohol | 12-13 mixture | 0.15 |
| PE3 | Alkyl acrylate synthesized in Preparatory Example 3 using NEODOL 25 (Air Products and Chemicals, Inc.) as the alcohol | 12-15 mixture | 0.17 |
| HDA | Heptadecanyl acrylate (BASF) | 17 | 3.12 |
| PE4 | Alkyl acrylate synthesized in Preparatory Example 4 using FINEOXOCOL 180N (Nissan Chemical America Corp.) as the alcohol | 18 | 4.23 |
| PE5 | Alkyl acrylate synthesized in Preparatory Example 5 using EXXAL 20 (Exxon Mobile) as the alcohol | 20 | 5.11 |

## Test methods

Differential Scanning Calorimetric (DSC) Analysis

DSC analysis was carried out for polymers prepared from each of the monomers from Table 1. No other monomers were added. To generate polymeric samples of each alkyl acrylate monomer in Table 1, each monomer was individually combined with 0.5 weight percent IRGACURE 651 (BASF) based on the weight of the mixture and mixed for 1 hour in an amber vial with magnetic stirring. Samples were cured in a clamped mold using a 2 millimeter thick silicone spacer cavity between release liners and glass plates. The layers in the clamped assembly were in the following order: glass plate, release liner, silicone spacer having a cavity filled with the sample, release liner, and glass plate. The mold was placed in a vertical position so that only one edge of the mold was in contact with air and then cured for 10 minutes on each glass face side with UV irradiation (365 nanometers with a power of about 1.5 mW/cm$^2$). After curing the sample, the glass plates and silicone spacers were removed to leave the homopolymer film between release liners.

Approximately 10 milligrams of each cured polymeric material from each alkyl acrylates of Table 1 were placed in individual standard aluminum DSC pans (TA Instruments T080715) and placed in the autosampler of a Differential Scanning Calorimeter (DSC, TA Instruments). For each sample, pans were individually placed on one of the differential posts in the enclosed DSC cell along with an empty reference pan on the opposite post. Temperature was raised to 55 °C and held for 10 minutes to thermally anneal the sample. The temperature was then cycled between -95°C and 55°C twice at 3°C/min. Transitions corresponding to the crystallization temperature ($T_c$), melting temperature ($T_m$), and glass transition temperature ($T_g$) were identified in the scanning profile of heat flow vs. temperature. Typically, crystallization and melting transitions show up as positive and negative heat flow peaks as the sample is cooled and heated, and the latent heat is given off or absorbed, respectively. Conversely a glass transition is generally represented by a shift in the profile slope upon heating as the heat capacity of the sample after the transition is altered. The glass transition temperature was recorded at the inflection point of the curve associated with this shift in heat flow profile.

Dynamic Mechanical Analysis

The polymeric materials prepared for DSC analysis (i.e., polymers prepared using only the individual monomers of Table 1) were also analyzed using Dynamic Mechanical Analysis (DMA) using a parallel plate rheometer (TA Instruments AR2000) to characterize the physical properties of each sample as a function of temperature. For each sample, approximately 0.2 grams of the polymeric material was centered between 8 millimeter diameter parallel plates of the rheometer and compressed until the edges of the sample were uniform with the edges of the top and bottom plates. The furnace doors that surround the parallel plates and shafts of the rheometer were shut and the temperature was raised to 140 °C and held for 5 minutes. The temperature was then decreased from 140°C to -80°C at 3°C/min while the parallel plates were oscillated at a frequency of 1 Hz and a constant strain of 0.4 percent. While many physical parameters of the material are recorded during the temperature ramp, storage modulus (G'), loss modulus (G"), and tan delta are of primary importance in the characterization of the polymers.

The glass transition temperature, $T_g$, of the polymeric material can be measured by first determining its storage (G') and loss shear moduli (G"). The ratio of G"/G', a unit less parameter typically denoted "tan delta", is plotted versus temperature. The maximum point (point where the slope is zero) in the transition region between the glassy region and the rubbery region of the tan delta curve, if well defined, determines the $T_g$ of the polymeric material at that particular frequency.

The shape and width of the tan delta profile vs. temperature are also important factors that can lend insight into the nature of the polymer network structure or chain structure that is present in each polymeric material. For example, a broad tan delta peak often suggests greater heterogeneity within a polymer network or polymer chains with a broad distribution of segmental motions at different temperatures. This characterization can be taken further to a system in which there are two distinct peaks within the tan delta profile often suggesting discrete phase separated domains within a polymer network or polymer chains with multiple modes of segmental motion within the polymer backbone or side chain structures. For each of the polymeric materials generated, storage modulus was recorded at room temperature (25°C), the $T_g$ was recorded at the peak of the tan delta curve, and the width of the tan delta peak was quantified by taking the peak width at a fixed height of approximately half of the peak intensity (FHPW).

Aging of Pressure-Sensitive Adhesive Films

Cured pressure-sensitive adhesive films were aged under two conditions. A first sample each formulation was stored at constant temperature (25°C) and constant relative humidity (50 percent) for 48 hours. A second sample of each formulation was placed in aluminum bins within an oven set at 70°C for one week. Both the first and second aged samples were characterized by visual inspection, peel adhesion, and shear adhesion.

Visual Characterization of Pressure-Sensitive Adhesive Films

Cured pressure-sensitive adhesive films were characterized for clarity by classifying as clear (cl), translucent (slightly hazy, trans), or opaque (op).

Peel Adhesion Strength

Peel adhesion is the force required to remove (peel) a coated flexible sheet material from a test panel measured at a specific angle and rate of removal. The peel force is expressed in Newtons per width of coated sheet (Newtons/dm). For each PSA coated sheet material (PSA positioned between a release liner and polyethylene terephthalate film), a strip approximately 12.7 millimeters wide and 15 centimeters long was cut. The release layer was removed and the adhesive strip (PSA on PET backing material) was then applied to the clean face of a stainless steel test panel. A heavy rubber roller was used to apply the strip. The free end of the adhesive strip was doubled back so that the angel of removal was 180 degrees. The free end was attached to the horizontal arm of the adhesion tester scale. The stainless steel plate was then affixed to the platform of the instrument which is mechanized to move at a controlled rate (30.5 cm/min) away from the scale. The peel test was started soon after the adhesive was applied to the stainless steel plate without allowing for an induction time for adhesion to build. The scale reading in ounces was read during the test as an average of both the peak and minimum forces during the peel. Three peel tests were run for each sample and averaged to yield the peel adhesion value.

Peel adhesion was also measured for each sample using the above procedure on test panels of high density polyethylene (HDPE, International Plastics- Edina, MN) rather than stainless steel.

High Temperature Shear Strength

Shear strength of an adhesive material is directly related to the internal strength or cohesiveness of the sample and is typically quantified by the amount of force required to pull an adhesive strip from a standard flat surface to which the sample has been affixed. Here, shear strength is measured in terms of the time required to pull a defined area of pressure-sensitive adhesive coated backing material from a stainless steel test panel under the stress of a constant or static load parallel to the test panel.

Shear tests were conducted using pressure-sensitive adhesive coated PET backing material having a dried coating thickness of approximately 0.08 millimeters. Cut adhesive strips were applied to a clean stainless steel panel such that a 12.7 millimeter by 25.4 millimeter portion of each strip was in firm contact with the panel and one end portion of each strip was free. The panel with adhesive strip was held in a rack such that the panel formed a 180 degree angle with the extended free end which was then tensioned by applying a one kilogram hanging weight. The rack was enclosed in a 70°C oven and the time elapsed for each adhesive strip to separate from the test panel was recorded as the shear strength in minutes. Two shear tests were performed for each sample adhesive and the shear strength was averaged. Samples that are still hanging after 10,000 minutes are terminated and recorded as +10,000 min.

Thermogravimetric Analysis

Thermogravimetric analysis (TGA) of the alkyl acrylate monomers was carried out using a thermogravimetric analyzer (TA Instruments, Q50). Approximately 10 milligrams of monomer was placed in each clean aluminum sample pan. Once loaded into the TGA instrument, the sample was heated to 120 °C at a rate of 30 °C/min and then held at 120 °C for 120 minutes. Weight loss due to monomer evaporation was recorded as a function of time. The time required to achieve complete evaporation of each monomer was designated when the weight percentage of the monomer remaining was less than 0.5 percent of the original weight.

Iso Index Characterization

The iso index is a measure of the degree of branching of the alkyl acrylate. A method identical to that described in the patent WO/2009/124979 was used. The alcohol used to make the acrylate monomer was derivatized with trichloroacetyl isocyanate (TAI). Proton NMR spectroscopy was used to determine the signals of the derivatized primary alcohol methyl and methylene groups. The iso index was calculated using Equation 1.

$$\text{Iso index} = ((I(CH_3)/3)/(I(CH_2OR)/2)) - 1 \qquad \text{(Equation 1)}$$

In Equation 1, the term $I(CH_3)$ refers to the total integration peak area corresponding to the methyl protons ($\delta$ is in the range of 0.70 to 0.95 ppm) and the term $I(CH_2\text{-}OR)$ refers to the total integration peak area of the methylene protons ($\delta$ is 3.9 to 4.5) in the derivatized primary alcohol. The term R refers to the remainder of the carbamic ester minus the $-OR^1$ group.

**Preparatory Example 1:** Preparation of Alkyl Acrylate Monomer from EXXAL 13 Alcohol

A mixture of EXXAL 13 (Exxon Mobil Chemicals, Houston, TX, 150.00 grams, 0.76 moles), acrylic acid (65.46 grams, 0.91 moles), p-toluene sulfonic acid hydrate (1.00 gram, 5.3 mmoles), phenothiazine (0.50 grams), and toluene (280 milliliters (mL)) was heated to reflux for four hours. The liberated water was collected in a Dean and Stark trap. The reaction was cooled and then washed with both 1.0 $\underline{M}$ NaOH and water. The solvent was removed under vacuum. The crude oil was then distilled under vacuum to give the product as a colourless oil having a boiling point of 80 to 90 °C at 0.05 mm Hg. The yield was 171.25 grams.

**Preparatory Example 2:** Preparation of Alkyl Acrylate Monomer from NEODOL 23 Alcohol

A mixture of NEODOL 23 (Air Products and Chemicals Inc., Allentown, PA, 105.28 grams, 0.54 moles), acrylic acid (50.21 grams, 0.70 moles), methanesulfonic acid (0.40 grams, 4.2 mmoesl), phenothiazine (0.15 grams), and toluene (200 mL) was heated to reflux for four hours. The liberated water was collected in a Dean and Stark trap. The reaction was cooled, diluted with ethyl acetate (200 mL), and then washed with both 1.0 $\underline{M}$ NaOH and water. The solvent was removed under vacuum. The crude oil was then distilled under vacuum to give the product as a colorless oil having a boiling point 88 to 94 °C at 0.07 mmHg. The yield was 103.27 grams.

**Preparatory Example 3:** Alkyl Acrylate Monomer from NEODOL 25 Alcohol

A mixture of NEODOL 25 (Air Products and Chemicals Inc., Allentown, PA, 100.01 grams, 0.48 moles), acrylic acid (41.15 grams, 0.57 moles), methanesulfonic acid (0.40 grams, 4.2 mmoles), phenothiazine (0.15 grams), and toluene (200 mL) was heated to reflux for five hours. The liberated water was collected in a Dean and Stark trap. The reaction was cooled, diluted with ethyl acetate (200 mL), and then washed with both 1.0 M NaOH and water. The solvent was removed under vacuum. The crude oil was mixed with an equal potion of hexane and passed through a column of neutral alumina to remove colored impurities. The alumina was eluted with hexane. The collected fraction filtrate was concentrated under vacuum to give the final product as a colorless oil. The yield was 107.40 grams.

**Preparatory Example 4:** Alkyl Acrylate Monomer from FINEOXOCOL 180N Alcohol

A mixture of FINEOXOCOL 180N (Nissan Chemical America Corporation, Houston, TX, 35.00 grams, 0.13 moles), triethylamine (Alfa Aesar, 15.59 grams, 0.15 moles), and dichloromethane (150 mL) was cooled to 5 °C using an ice bath. Acryloyl chloride (Aldrich, 14.07 grams, 0.16 moles) was added dropwise over 30 minutes. After 4 hours, the mixture was filtered and then concentrated under vacuum. The remaining oil was diluted with ethyl acetate (250 mL) and washed successively with 1.0 M HCl, 1.0 M NaOH, and brine. The organic layer was then concentrated under vacuum. The crude oil was diluted with hexane (100 mL) and passed through a column of neutral alumina to remove colored impurities. The alumina was eluted with hexane. The collected fraction filtrate was concentrated under vacuum to give the final product as a colorless oil. The yield was 29.71 grams.

**Preparatory Example 5:** Alkyl Acrylate Monomer from EXXAL 20 Alcohol

A mixture of EXXAL 20 (Exxon Mobil Chemicals, Houston, TX, 10.00 grams, 33 mmoles), triethylamine (Alfa Aesar, 4.05 grams, 40 mmoles), and dichloro methane (50 mL) was cooled to 5°C using an ice bath. Acryloyl chloride (Aldrich, 3.70 grams, 40 mmoles) was added dropwise over 15 minutes. After 17 hours, the mixture was filtered and then concentrated under vacuum. The remaining oil was diluted with ethyl acetate (50 mL) and washed with saturated aqueous sodium bicarbonate solution. The organic layer was then concentrated under vacuum. The crude oil was purified by column chromatography over silica gel using a 95/5 mixture by volume of hexane/ethyl acetate. The product was isolated as a colorless oil. The yield was 9.40 grams.

DSC and DMA analysis of polymeric materials

DSC and DMA analysis for polymeric material generated using only the alkyl acrylate monomers in Table 1 as the polymerizable material was completed following the procedures outlined above. The polymeric material in some instances (e.g., with HDA) were prepared from a mixture of structural isomers rather than from a single isomer. The results are listed below in Table 2. The term "NO" indicates that a transition was not observed. The term "NM" indicates that the sample was not measured.

Table 2: DSC Analysis and DMA Analysis of Polymeric Material Prepared Using Only the Polymerizable Material of Table 1

| Monomer | Monomer Alkyl Carbon Number | DSC Analysis | | | DMA Analysis | | |
|---|---|---|---|---|---|---|---|
| | | $T_c$ (°C) | $T_m$ (°C) | $T_g$ (°C) | $T_g$ (°C) | Storage Modulus at 25 °C (Pa) | FWPH (°C) |
| EHA | 8 | NO | NO | -63.4 | -32.0 | 18,800 | 34 |
| PHA | 10 | NO | NO | -69.1 | -43.0 | 8,900 | 30 |
| LA | 12 | -7.9 | 3.9 | NO | -NO | 4,500 | NO |
| PE1 | 13 | NO | NO | -58.6 | -31.2 | 13,300 | 43 |
| PE2 | 12-13 | -8.0 | -1.0 | NO | NM | NM | NM |
| PE3 | 12-15 | -1.0 | 6.1 | NO | NM | NM | NM |
| PE4 | 18 | NO | NO | -58.0 | -21.0 | 18,500 | 67 |
| PE5 | 20 | NO | NO | -59.1 | -11.0 | 24,510 | 57 |
| HDA | 17 | NO | NO | -69.2 | -36.0 | 7,300 | 42 |

Volatility of Alkyl Acrylate Monomers

To investigate monomer volatility, select monomers from Table 1 were heated and held at 120°C for 2 hours following the thermogravimetric analysis test method. The time required for complete evaporation of monomer at this temperature was recorded and is shown in Table 3 below. Samples that did not reach complete evaporation within the two hour test period are designated (*). For these samples a linear REGRESSION model equation was fit to the data to extrapolate the time required to reach complete evaporation of the monomer.

Table 3: Evaporation of Alkyl Acrylate Monomers at 120°C

| Monomer | Alkyl Carbon Number | Monomer Wt. Loss after 120 minutes (%) | Time To Achieve Complete Evaporation (min) |
|---|---|---|---|
| EHA | 8 | 100% | 7.4 |
| PHA | 10 | 100% | 15.2 |
| Exx113 | 13 | 100% | 61.9 |
| N25 | 12-15 | 63.4% | 215 * |
| Exx120 | 20 | 11.2% | 1,100* |
| HDA | 17 | 23.0% | 900* |

As the alkyl chain length of the alkyl acrylate is increased, the boiling point increases. This is evident as the amount of weight lost when held at 120°C is significantly reduced for the monomers with longer alkyl groups. A higher boiling monomer may beneficially reduce the overall volatile content and potential odor of the fabricated PSA article generated from these monomers.

**Examples 1-4, Comparative Examples C1-C8:** Peel and Shear Adhesive Properties of Acrylate Formulated Films

Select alkyl acrylates included in Table 1 were each copolymerized and formulated into PSA films using the following formulation. The following materials were mixed using a magnetic stirring base in a clear glass vial: 28.5 grams of the alkyl acrylate monomer identified in Table 4 as the base monomer, 0.02 grams of IRGACURE 651 (BASF), 0.3 grams of acrylic acid (AA, Alfa Aesar), and 1.2 grams of hydroxyethyl acrylate (HEA, Aldrich) were mixed using a magnetic stir bar in a clear glass vial. The glass vial was then purged with nitrogen for 5 minutes to remove dissolved oxygen and then placed in front of a UV light (365 nanometers with a power of about 1.5 mW/cm$^2$) until a coatable viscosity was achieved. The target viscosity for each thickened sample was approximately 3000 centipoise (cP) at room temperature.
Each thickened" sample was then formulated with low polarity tackifier REGALREZ 1094 (Eastman Co.) at 50, 70, 75, or 85 pph (parts per hundred relative to the resin) as shown in Table 4. Additional IRGACURE 651, NYFLEX 222B (Nynas AB) plasticizer, as well as the photocrosslinker XL-330 (2,4,-bis(trichloromethyl)-6-(4-methoxyphenyl)-tri-azine from 3M Company) was added to each sample. As an example formulation, to prepare a pressure-sensitive adhesive composition with 50 pph tackifier, 5 grams of the thickened sample was mixed with in an amber vial along with 2.5 grams of REGALREZ 1094 tackifier (50 pph), 0.009 grams (0.18 pph) of IRGACURE 651, and 0.008 grams (0.16 pph) of XL-330. The amber vial was then rotated in the dark until the solid ingredients were completely dissolved. This adhesive formulation was coated onto primed PET film at a coating thickness of 0.08 millimeters and covered with a silicone treated release liner. The PET was obtained from Mitsubishi (Greer, SC) under the trade designation HOSTA-PHEN 3SAB. The release liner was obtained from Godega Disant (Urbono, Italy). This construction was then cured using approximately 600 mJ/cm$^2$ of UV irradiation. This procedure was repeated for each additional adhesive formulation. The compositions are summarized in Table 4.

Table 4: Pressure-sensitive adhesive compositions

| Example | Base Monomer | Monomer Alkyl Carbon Number | R-1094 Loading (pph) | N222B Loading (pph) |
|---|---|---|---|---|
| C1 | EHA | 8 | 50 | 0 |
| C2 | EHA | 8 | 75 | 0 |
| C3 | EHA | 8 | 85 | 0 |
| C4 | PHA | 10 | 50 | 0 |

(continued)

| Example | Base Monomer | Monomer Alkyl Carbon Number | R-1094 Loading (pph) | N222B Loading (pph) |
|---------|-------------|-----------------------------|---------------------|---------------------|
| C5 | PHA | 10 | 75 | 0 |
| C6 | PHA | 10 | 85 | 0 |
| C7 | PE1 | 13 | 50 | 0 |
| C8 | PE1 | 13 | 75 | 0 |
| C9 | PE1 | 13 | 85 | 0 |
| E1 | HDA | 17 | 70 | 0 |
| E2 | HDA | 17 | 85 | 0 |
| E3 | HDA | 17 | 70 | 3 |
| E4 | HDA | 17 | 85 | 5 |

The cured adhesive films were characterized for clarity by classifying the adhesive film as clear (cl), translucent (slightly hazy, trans), or opaque (op). The 180 degree peel strength was measured on stainless steel and high density polyethylene (HDPE) immediately after curing and then characterized for clarity and 180 degree peel strength on HDPE. The results are shown in Table 5 immediately after curing and in Table 6 after aging for 1 week at 70°C.

**Table 5:** Peel Strength and Visual Characteristics of Pressure-sensitive Adhesive Compositions C1-C9 and E1-E4 After Curing

| Example | Visual | Stainless Steel (N/dm) | HDPE (N/dm) | High Temperature Shear Performance (min) |
|---------|--------|------------------------|-------------|------------------------------------------|
| C1 | op | 20 | 18 | <100 |
| C2 | op | 9 | 4 | <100 |
| C3 | op | 4 | 2 | <100 |
| C4 | cl | 43 | 31 | NM |
| C5 | cl | 44 | 38 | NM |
| C6 | trans | 43 | 21 | NM |
| C7 | cl | 61 | 48 | NM |
| C8 | cl | 79 | 23 | NM |
| C9 | cl | 22 | 3 | NM |
| E1 | cl | 116 | 62 | +10,000 |
| E2 | cl | 116 | 72 | +10,000 |
| E3 | cl | 107 | 57 | +10,000 |
| E4 | cl | 116 | 73 | +10,000 |

**Table 6:** Peel Strength and Visual Characteristics of Pressure-sensitive Adhesive Compositions C1-C9 and E1-E4 After Aging

| Example | Visual | HDPE (N/dm) |
|---------|--------|-------------|
| C1 | op | 13 |
| C2 | op | 4 |
| C3 | op | 3 |
| C4 | trans | 24 |

(continued)

| Example | Visual | HDPE (N/dm) |
|---------|--------|-------------|
| C5 | trans | 1 |
| C6 | trans | 4 |
| C7 | cl | 46 |
| C8 | trans | 1 |
| C9 | trans | 2 |
| E1 | cl | 59 |
| E2 | cl | 77 |
| E3 | cl | 56 |
| E4 | cl | 73 |

The longer alkyl side chains (e.g., greater than 13 carbon atoms) improve the compatibility of the elastomeric material with the hydrocarbon tackifier. The phase separation of the tackifier from the elastomeric material is noted in the visual appearance. When the PSA is clear, there is good compatibility between the elastomeric material and the tackifier. In these examples, the pressure-sensitive adhesives with good compatibility between the tackifier and the elastomeric material tend to have improved shear holding performance and peel strength compared to those that are not as compatible.

**Claims**

1. A pressure-sensitive adhesive composition comprising an (meth)acrylic-based elastomeric material comprising a reaction product of polymerizable material comprising:

   (a) a first monomer that is an alkyl (meth)acrylate ester of a primary alcohol $R^1$-OH, the alkyl (meth)acrylate ester being of Formula (I)

   $$CH_2=C(R^2)-(CO)-OR^1 \qquad (I)$$

   wherein

   $R^1$ is an alkyl having 14 to 25 carbon atoms and the primary alcohol $R^1$-OH has an iso index equal to at least 2 but no greater than 4;
   $R^2$ is hydrogen or methyl; and

   (b) a second monomer having an ethylenically unsaturated group,
   wherein the pressure sensitive adhesive composition further comprises a tackifier comprising a C5-based hydrocarbon resin, a C9-based hydrocarbon resin, a C5/C9-based hydrocarbon resin, a dicyclopentadiene-based resin, or a mixture thereof.

2. The pressure-sensitive adhesive composition of claim 1, wherein the first monomer comprises a plurality of different alkyl (meth)acrylate esters of Formula (I).

3. The pressure-sensitive adhesive composition of claim 1 or 2, wherein the first monomer comprises a plurality of structural isomers of Formula (I).

4. The pressure-sensitive adhesive composition of any one of claims 1 to 3, wherein each $R^1$ has 17 to 21 carbon atoms.

5. The pressure-sensitive adhesive composition of any one of claims 1 to 4, wherein each $R^1$ has 17 carbon atoms.

6. The pressure-sensitive adhesive composition of any one of claims 1 to 5, wherein the second monomer comprises a non-polar (meth)acrylate ester that is not of Formula (I), a non-polar vinyl monomer without a (meth)acryloyl group, a polar monomer, a crosslinker with at least two ethylenically unsaturated groups, or a combination thereof.

7. The pressure-sensitive adhesive composition of claim 6, wherein the polar monomer comprises an acidic group, a hydroxyl group, or a nitrogen-containing group.

8. The pressure-sensitive adhesive composition of any one of claims 1 to 7, wherein the polymerizable material comprises at least 50 to 99.5 weight percent of the alkyl (meth)acrylate ester of Formula (I) and 0.5 to 50 weight percent of the second monomer based on a total weight of polymerizable material.

9. The pressure-sensitive adhesive composition of any one of claims 1 to 7, wherein the polymerizable material comprises at least 50 weight percent of the alkyl (meth)acrylate ester of Formula (I) and up to 15 weight percent of a polar monomer based on a total weight of polymerizable material.

10. The pressure-sensitive adhesive composition of any one of claims 1 to 9, wherein the tackifier comprises a C5-based hydrocarbon resin, a C9-based hydrocarbon resin, a C5/C9-based hydrocarbon resin, or a mixture thereof.

11. The pressure-sensitive adhesive composition of any one of claims 1 to 10, wherein the tackifier comprises a hydrogenated C5-based hydrocarbon resin, a hydrogenated C9-based hydrocarbon resin, a hydrogenated C5/C9-based hydrocarbon resin, or a mixture thereof.

12. An article comprising:

   a pressure-sensitive adhesive composition as in claim 1; and
   a substrate adhered to the pressure-sensitive adhesive.

13. The article of claim 12, wherein the pressure-sensitive adhesive composition comprises 1 to 150 part tackifier for 100 parts (meth)acrylic-based elastomeric material.

14. The article of claim 13, wherein the tackifier comprises a C5-based hydrocarbon resin, a C9-based hydrocarbon resin, a C5/C9-based hydrocarbon resin, or a mixture thereof.

15. The article of claim 13, wherein the tackifier comprises a hydrogenated C5-based hydrocarbon resin, a hydrogenated C9-based hydrocarbon resin, a hydrogenated C5/C9-based hydrocarbon resin, or a mixture thereof.

**Patentansprüche**

1. A Haftklebstoffzusammensetzung umfassend ein (Meth)acryl-basiertes elastomeres Material umfassend ein Reaktionsprodukt von polymerisierbarem Material, umfassend:

   (a) ein erstes Monomer, das ein Alkyl-(meth)acrylatester eines primären Alkohols $R^1$-OH ist, wobei der Alkyl-(meth)acrylatester die Formel (I) aufweist

   $$CH_2=C(R^2)-(CO)-OR^1 \qquad (I)$$

   wobei

   $R^1$ ein Alkyl mit 14 bis 25 Kohlenstoffatomen ist und der primäre Alkohol $R^1$ - OH einen Iso-Index von mindestens gleich 2 jedoch nicht größer als 4 aufweist;
   $R^2$ Wasserstoff oder Methyl ist; und

   (b) ein zweites Monomer mit einer ethylenisch ungesättigten Gruppe, wobei die Haftklebstoffzusammensetzung weiterhin einen Klebrigmacher umfasst, umfassend ein C5-basiertes Kohlenwasserstoffharz, ein C9-basiertes Kohlenwasserstoffharz, ein C5/C9-basiertes Kohlenwasserstoffharz, ein Dicyclopentadien-basiertes Harz, oder ein Gemisch davon.

2. Haftklebstoffzusammensetzung nach Anspruch 1, wobei das erste Monomer eine Vielzahl von verschiedenen Alkyl(meth)acrylatestern der Formel (I) umfasst.

3. Haftklebstoffzusammensetzung nach Anspruch 1 oder 2, wobei das erste Monomer eine Vielzahl von Strukturisomeren der Formel (I) umfasst.

4. Haftklebstoffzusammensetzung nach einem der Ansprüche 1 bis 3, wobei $R^1$ jeweils 17 bis 21 Kohlenstoffatome aufweist.

5. Haftklebstoff Zusammensetzung nach einem der Ansprüche 1 bis 4, wobei $R^1$ jeweils 17 Kohlenstroffatome aufweist.

6. Haftklebstoffzusammensetzung nach einem der Ansprüche 1 bis 5, wobei das zweite Monomer einen nicht polaren (Meth)acrylatester, der nicht die Formel (I) aufweist, ein nicht polares Vinyl-Monomer ohne eine (Meth)acryloyl-Gruppe, ein polares Monomer, einen Vernetzer mit mindestens zwei ethylenisch ungesättigten Gruppen, oder eine Kombination davon umfasst.

7. Haftklebstoff Zusammensetzung nach Anspruch 6, wobei das polare Monomer eine Säuregruppe, eine Hydroxylgruppe oder eine Stickstoffgruppe umfasst.

8. Haftklebstoffzusammensetzung nach einem der Ansprüche 1 bis 7, wobei das polymerisierbare Material mindestens 50 bis 99,5 Gew.-% des Alkyl(meth)acrylatesters der Formel (I) und 0,5 bis 50 Gew.-% des zweiten Monomers bezogen auf ein Gesamtgewicht des polymerisierbaren Materials umfasst.

9. Haftklebstoffzusammensetzung nach einem der Ansprüche 1 bis 7, wobei das polymerisierbare Material mindestens 50 Gew.-% des Alkyl(meth)acrylatesters der Formel (I) und bis zu 15 Gew.-% eines polaren Monomers bezogen auf ein Gesamtgewicht des polymerisierbaren Materials umfasst.

10. Haftklebstoff Zusammensetzung nach einem der Ansprüche 1 bis 9, wobei der Klebrigmacher ein C5-basiertes Kohlenwasserstoffharz, ein C9-basiertes Kohlenwasserstoffharz, ein C5/C9-basiertes Kohlenwasserstoffharz, oder ein Gemisch davon umfasst.

11. Haftklebstoff Zusammensetzung nach einem der Ansprüche 1 bis 10, wobei der Klebrigmacher ein hydriertes C5-basiertes Kohlenwasserstoffharz, ein hydriertes C9-basiertes Kohlenwasserstoffharz, ein hydriertes C5/C9-basiertes Kohlenwasserstoffharz, oder ein Gemisch davon umfasst.

12. Artikel, umfassend:

   eine Haftklebstoffzusammensetzung nach Anspruch 1; und
   ein an dem Haftklebstoff haftendes Substrat.

13. Gegenstand nach Anspruch 12, wobei die Haftklebstoffzusammensetzung 1 bis 150 Teile Klebrigmacher auf 100 Teile (Meth)acryl-basiertes elastomeres Material umfasst.

14. Gegenstand nach Anspruch 13, wobei der Klebrigmacher ein C5-basiertes Kohlenwasserstoffharz, ein C9-basiertes Kohlenwasserstoffharz, ein C5/C9-basiertes Kohlenwasserstoffharz, oder ein Gemisch davon umfasst.

15. Gegenstand nach Anspruch 13, wobei der Klebrigmacher ein hydriertes C5-basiertes Kohlenwasserstoffharz, ein hydriertes C9-basiertes Kohlenwasserstoffharz, ein hydriertes C5/C9-basiertes Kohlenwasserstoffharz, oder ein Gemisch davon umfasst.

## Revendications

1. Composition adhésive sensible à la pression comprenant un matériau élastomère à base (méth)acrylique comprenant un produit de réaction d'un matériau polymérisable comprenant :

   (a) un premier monomère qui est un ester (méth)acrylate d'alkyle d'un alcool primaire $R^1$-OH, l'ester (méth)acrylate d'alkyle étant de formule (I)

$$CH_2=C(R^2)-(CO)-OR^1 \qquad \text{(I)}$$

dans laquelle

R$^1$ est un alkyle possédant 14 à 25 atomes de carbone et l'alcool primaire R$^1$-OH a un indice iso égal à au moins 2 mais pas supérieur à 4 ;
R$^2$ est hydrogène ou méthyle ; et

(b) un deuxième monomère possédant un groupe à insaturation éthylénique,
dans laquelle la composition adhésive sensible à la pression comprend un agent poisseux comprenant une résine hydrocarbonée à base C5, une résine hydrocarbonée à base C9, une résine hydrocarbonée à base C5/C9, une résine à base dicyclopentadiène ou un mélange de celles-ci.

2. Composition adhésive sensible à la pression selon la revendication 1, dans laquelle le premier monomère comprend une pluralité d'esters (méth)acrylate d'alkyle différents de formule (I).

3. Composition adhésive sensible à la pression selon la revendication 1 ou 2, dans laquelle le premier monomère comprend une pluralité d'isomères structuraux de formule (I).

4. Composition adhésive sensible à la pression selon l'une quelconque des revendications 1 à 3, dans laquelle chaque R$^1$ possède 17 à 21 atomes de carbone.

5. Composition adhésive sensible à la pression selon l'une quelconque des revendications 1 à 4, dans laquelle chaque R$^1$ possède 17 atomes de carbone.

6. Composition adhésive sensible à la pression selon l'une quelconque des revendications 1 à 5, dans laquelle le deuxième monomère comprend un ester (méth)acrylate apolaire qui n'est pas de formule (I), un monomère vinylique apolaire dépourvu de groupe (méth)acryloyle, un monomère polaire, un agent de réticulation avec au moins deux groupes à insaturation éthylénique, ou une de leurs combinaisons.

7. Composition adhésive sensible à la pression selon la revendication 6, dans laquelle le monomère polaire comprend un groupe acide, un groupe hydroxyle ou un groupe azoté.

8. Composition adhésive sensible à la pression selon l'une quelconque des revendications 1 à 7, dans laquelle le matériau polymérisable comprend au moins 50 à 99,5 % en poids de l'ester (méth)acrylate d'alkyle de formule (I) et 0,5 à 50 % en poids du deuxième monomère par rapport au poids total de matériau polymérisable.

9. Composition adhésive sensible à la pression selon l'une quelconque des revendications 1 à 7, dans laquelle le matériau polymérisable comprend au moins 50 % en poids de l'ester (méth)acrylate d'alkyle de formule (I) et jusqu'à 15 % en poids d'un monomère polaire par rapport au poids total de matériau polymérisable.

10. Composition adhésive sensible à la pression selon l'une quelconque des revendications 1 à 9, dans laquelle l'agent poisseux comprend une résine hydrocarbonée à base C5, une résine hydrocarbonée à base C9, une résine hydrocarbonée à base C5/C9 ou un mélange de celles-ci.

11. Composition adhésive sensible à la pression selon l'une quelconque des revendications 1 à 10, dans laquelle l'agent poisseux comprend une résine hydrocarbonée à base C5 hydrogénée, une résine hydrocarbonée à base C9 hydrogénée, une résine hydrocarbonée à base C5/C9 hydrogénée ou un mélange de celles-ci.

12. Article comprenant :

une composition adhésive sensible à la pression selon la revendication 1 ; et
un substrat qui adhère à l'adhésif sensible à la pression.

13. Article selon la revendication 12, dans lequel la composition adhésive sensible à la pression comprend de 1 à 150 parties d'agent poisseux pour 100 parties de matériau élastomère à base (méth)acrylique.

14. Article selon la revendication 13, dans lequel l'agent poisseux comprend une résine hydrocarbonée à base C5, une résine hydrocarbonée à base C9, une résine hydrocarbonée à base C5/C9 ou un de leurs mélanges.

**15.** Article selon la revendication 13, dans lequel l'agent poisseux comprend une résine hydrocarbonée à base C5 hydrogénée, une résine hydrocarbonée à base C9 hydrogénée, une résine hydrocarbonée à base C5/C9 hydrogénée ou un mélange de celles-ci.

**EP 2 760 960 B3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61538997 A
- EP 2072594 A1, Kondou
- US 5648425 A, Everaerts
- US 6777079 B2, Zhou
- US 201104486 A1, Ma
- WO 2009124979 A1, Rudolph
- US 20110130582 A, Bette
- US 6777079 B, Zhou
- WO 2009124979 A